(19) Europäisches Patentamt
European Patent Office
Office européen des brevets

(11) **EP 1 655 333 B1**

(12) **EUROPEAN PATENT SPECIFICATION**

(45) Date of publication and mention
of the grant of the patent:
**05.09.2007 Bulletin 2007/36**

(51) Int Cl.:
***C08L 23/04*** *(2006.01)*     ***C08L 23/08*** *(2006.01)*
***C08F 10/02*** *(2006.01)*     ***C08F 297/08*** *(2006.01)*

(21) Application number: **04026092.9**

(22) Date of filing: **03.11.2004**

(54) **Multimodal polyethylene composition for pipes**

Multimodale Polyethylenzusammensetzung für Rohre

Composition de polyéthylène multimodal pour tuyaux

(84) Designated Contracting States:
**AT BE BG CH CY CZ DE DK EE ES FI FR GB GR HU IE IS IT LI LU MC NL PL PT RO SE SI SK TR**

(43) Date of publication of application:
**10.05.2006 Bulletin 2006/19**

(73) Proprietor: **Borealis Technology Oy**
**06101 Porvoo (FI)**

(72) Inventors:
• **Gustafsson, Bill**
**444 41 Stenungsund (SE)**
• **Van Praet, Eric**
**3220 Holsbeek (BE)**
• **Bäckman, Mats**
**416 51 Göteborg (SE)**

(74) Representative: **Kador & Partner**
**Corneliusstrasse 15**
**80469 München (DE)**

(56) References cited:
**EP-A- 1 146 079**         **EP-A- 1 460 105**
**US-A1- 2003 149 180**     **US-A1- 2004 198 911**

**Description**

The present invention relates to a multimodal polyethylene composition for pipes which comprises a polymeric base resin comprising two polyethylene fractions with different molecular weight. Furthermore, the present invention relates to a process for the production of said composition, a pipe comprising said composition and to the use of said composition for the production of a pipe.

Multimodal polyethylene compositions are frequently used e.g. for the production of pipes due to their favourable physical and chemical properties as e.g. mechanical strength, corrosion resistance and long-term stability. When considering that the fluids, such as water or natural gas, transported in a pipe often are pressurized and have varying temperatures, usually within a range of 0°C to 50°C, it is obvious that the polyethylene composition used for pipes must meet demanding requirements.

In particular, the polyethylene composition must have high mechanical strength on the one hand and good long-term stability, notch/creep resistance and crack propagation resistance on the other hand. However, at least some of these properties are contrary to each other so that it is difficult to provide a composition for pipes which excels in all of these properties simultaneously. For example, stiffness imparting mechanical strength to the pipe is known to improve with higher density but, in contrast, notch/creep resistance is known to improve with reduced density.

Furthermore, as polymer pipes generally are manufactured by extrusion, or, to a smaller extent, by injection moulding, the polyethylene composition also must have good processability.

It is known that in order to comply with the contrary requirements for a pipe material bimodal polyethylene compositions may be used. Such compositions are described e.g. in EP 0 739 937 and WO 02/102891. The bimodal polyethylene compositions described in these documents usually comprise a low molecular weight polyethylene fraction and a high molecular weight fraction of an ethylene copolymer comprising one or more alpha-olefin comonomers.

It is the object of the present invention to provide a polyethylene composition for pipes having an improved combination of properties, in particular having enhanced stress crack propagation resistance and, simultaneously, good long-term stability.

The present invention is based on the surprising finding that the above mentioned object can be achieved by a polyethylene composition comprising at least two polymer fractions with different molecular weights wherein the high molecular weight fraction comprises a composition with a high density in relation to its comonomer content.

Accordingly, the present invention provides a polyethylene composition comprising a base resin which comprises

(A) an ethylene homo- or copolymer fraction, and

(B) an ethylene copolymer fraction comprising at least one alpha-olefin comonomer having at least 4 carbon atoms, wherein

(i) fraction (A) has a lower weight average molecular weight than fraction (B), and

(ii) the comonomer content and the density d of the base resin which is 949.5 kg/m$^3$ or lower satisfy the following relation:

$$\text{comonomer [mol\%]} \geq -0.0612 \ d \ [\text{kg/m}^3] \ \text{mol\%/(kg/m}^3)$$
$$+ \ 58.6, \text{ and}$$

(iii) the base resin comprises more than 0.5 mol% of at least one alpha-olefin comonomer having at least 4 carbon atoms.

It has been found that with such polyethylene compositions pipes can be produced which have a high mechanical strength, which e.g. allows for the pipe being used for the transport of pressurized fluids, high crack propagation resistance and an excellent long-term stability. Furthermore, the polyethylene compositions also have good processability.

It should be noted that the composition of the present invention is characterised not by any single one of the above defined features, but by their combination. By this unique combination of features it is possible to obtain pressure pipes of superior performance, particularly with regard to minimum required strength (MRS), processability, rapid crack propagation (RCP) resistance, impact strength, and slow crack growth resistance.

The term molecular weight where used herein denotes the weight average molecular weight $M_w$.

The term "base resin" denotes the entirety of polymeric components in the polyethylene composition according to the invention, usually making up at least 90 wt% of the total composition. Preferably, the base resin is consisting of fractions (A) and (B), optionally further comprising a prepolymer fraction in an amount of up to 20 wt%, preferably up to 10 wt%, more preferably up to 5 wt% of the total base resin.

In addition to the base resin, usual additives for utilization with polyolefins, such as pigments (for example carbon black), stabilizers (antioxidant agents), antacids and/or anti-UVs, antistatic agents and utilization agents (such as processing aid agents) may be present in the polyethylene composition. Preferably, the amount of these additives is 10 wt% or below, further preferred 8 wt% or below, of the total composition.

Preferably, the composition comprises carbon black in an amount of 8 wt% or below, further preferred of 1 to 4 wt%, of the total composition.

Further preferred, the amount of additives different from carbon black is 1 wt% or less, more preferably 0.5 wt% or less.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In a preferred embodiment the polyethylene composition has an shear thinning index $SHI_{(2.7/210)}$ of 50 or more, more preferably of 75 or more, still more preferably of 85 or more, and most preferred of 95 or more.

The SHI is the ratio of the viscosity of the polyethylene composition at different shear stresses. In the present invention, the shear stresses at 2.7 kPa and 210 kPa are used for calculating the $SHI_{(2.7/210)}$ which may serve as a measure of the broadness of the molecular weight distribution.

Where the SHI of the composition is 50 or higher it is preferred that the comonomer content, the density d of the base resin and the shear thinning index SHI of the composition satisfy the following relation:

$$\text{comonomer [mol\%]} \geq -0.0612 \text{ d [kg/m}^3\text{] mol\%/(kg/m}^3\text{)} + 58.5 + [(SHI/100)^3]/3,$$

if the SHI if between 50 and 100, and satisfy the following relation:

$$\text{comonomer [mol\%]} \geq -0.0612 \text{ d [kg/m}^3\text{] mol\%/(kg/m}^3\text{)} + 58.5 + (SHI/300), \text{ preferably}$$

$$\text{comonomer [mol\%]} \geq -0.0612 \text{ d [kg/m}^3\text{] mol\%/(kg/m}^3\text{)} + 58.5 + [(SHI/100)^2]/3,$$

if the SHI is higher than 100.

In a further preferred embodiment, polyethylene composition has a slow crack propagation resistance of at least 500 h, more preferably 1000 h, still more preferably 2000 h, still more preferably 3000 h, and most preferably 4000 h at 4.6 MPa hoop stress and 9.2 bar internal pressure at 80°C

Furthermore, the polyethylene composition preferably has an $MFR_5$ of 0.1 to 1.2 g/10min, more preferably of 0.2 to 1.0 g/10min, and most preferably from 0.3 to 0.9 g/10min.

The base resin of the polyethylene composition according to the invention has a density of below 949.5 kg/m³.

In the polyethylene composition according to the invention, preferably the weight ratio of fractions (A):(B) in the base resin is 35:65 or higher, i.e. is 35:65 or an even higher amount of fraction (A) is present, further preferred is 40:60 or higher, and most preferred is 42:58 or higher.

Furthermore, preferably the weight ratio of fractions (A):(B) in the base resin is 60 to 40 or lower, more preferably is 50:50 or lower.

The base resin of the polyethylene composition preferably comprises at least 0.55 mol%, more preferably at least 0.75 mol%, and still more preferably at least 0.95 mol% of at least one alpha-olefin comonomer having at least 4 carbon atoms.

Fraction (B) of the polyethylene composition preferably comprises at least 1.0 mol%, more preferably at least 1.1 mol%, and still more preferably at least 1.5 mol% of at least one alpha-olefin comonomer having at least 4 carbon atoms.

The alpha-olefin comonomer of fraction (B) and the base resin is preferably having from 4 to 8 carbon atoms, more preferably from 6 to 8 carbon atoms, and most preferably is selected from 1-hexene, 4-methyl-1-pentene and 1-octene.

Further, the base resin of the polyethylene composition preferably has a density of 945 kg/m$^3$ or higher.

The MFR$_5$ of the base resin of the polyethylene composition preferably is 1 g/10min or below.

Fraction (A) of the polyethylene composition preferably is having a density of 950 kg/m$^3$ or higher, more preferably of 960 kg/m$^3$ or higher, and most preferably of 968 kg/m$^3$ or higher.

Fraction (A) of the polyethylene composition preferably is an ethylene homopolymer.

The MFR$_2$ of fraction (A) preferably is at least 100 g/10min, more preferably is at least 200 g/10min.

In the polyethylene composition the ratio of MFR$_2$ of fraction (A) to MFR$_5$ of the base resin is preferably 50 or higher, more preferably is from 100 to 10000.

The polyethylene composition according to the invention, in particular when used for the production of a pipe, preferably has an impact strength at 0°C of at least 10 kJ/m$^2$, more preferably of at least 12 kJ/m$^2$ and in particular of at least 15 kJ/m$^2$. The impact strength is determined as Charpy Impact Strength according to ISO 179.

Furthermore, the polyethylene composition has good rapid crack resistance. A pipe made of the multimodal polyethylene composition according to the present invention preferably has an RCP-S4 value of -1 °C or lower, more preferably —4°C or lower, and most preferably —7 °C or lower.

A pressure pipe made of the multimodal polymer composition according to the present invention preferably has a design stress rating of at least MRS8.0, and more preferably MRS 10.0.

Where herein features of fractions (A) and/or (B) of the composition of the present invention are given, these values are generally valid for the cases in which they can be directly measured on the respective fraction, e.g. when the fraction is separately produced or produced in the first stage of a multistage process.

However, the base resin may also be and preferably is produced in a multistage process wherein e.g. fractions (A) and (B) are produced in subsequent stages. In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

The polyethylene composition according the invention preferably is produced so that at least one of fractions (A) and (B), preferably (B), is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Further, the polyethylene base resin preferably is produced in a multistage process. Polymer compositions produced in such a process are also designated as "in-situ"-blends.

A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst.

Accordingly, it is preferred that fraction (A) and (B) of the polyethylene composition are produced in different stages of a multistage process.

Preferably, the multistage process comprises at least one gas phase stage in which, preferably, fraction (B) is produced.

Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total base resin is produced. The prepolymer is preferably an ethylene homopolymer (HDPE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably $MgCl_2$ based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis and EP0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

It is preferred that the multimodal base resin of the polyethylene composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105°C, and most preferably is 92 to 100°C, and the temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 200 to 800 moles of $H_2$/kmoles of ethylene are added to the reactor, when the LMW fraction is produced in this reactor, and 0 to 50 moles of $H_2$/kmoles of ethylene are added to the gas phase reactor when this reactor is producing the HMW fraction.

Preferably, the base resin of the polyethylene composition is produced with a rate of at least 5 tons/h, more preferably at least 10 ton/h, and most preferably at least 15 tons/h.

The composition of the invention preferably if produced in a process comprising a compounding step, wherein the composition of the base resin, i.e. the blend, which is typically obtained as a base resin powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder.. As an example of an extruder for the present compounding step may be those as supplied by Japan steel works, Kobe steel or Farrel-Pomini, e.g. JSW 460P.

In one embodiment, the extrusion step is carried out using production rates of at least 400, at least 500, at least 1000 kg/h may be used in said compounding step.

In another embodiment the compounding step can be effected with production rate of that least 5 tons/h, preferably at least 15 tons/h, more preferably at least 20 or 25 tons/h or even at least 30 or more tons/h, such as at least 50, such 1-50, preferably 5-40, 10-50, in some embodiments 10-25 tons/h.

Alternatively, production rates at least 20 tons/h, preferably at least 25 tons/h, even at least 30 tons/h, e.g. 25-40 tons/h may be desired during the compounding step.

The present multimodal polyethylene composition of the invention enables such production rates within the property window of the invention, i.e. with various property combinations of MFR's of the fractions and of final base resin variations together with excellent homogeneity, just to mention few.

Preferably, in said extrusion step, a total SEI (specific energy input) of the extruder may be at least 150, 150-400, 200-350, 200-300 kWh/ton.

It is known that the temperature of the polymer melt may vary in the extruder, the highest (max) melt temperature of the composition in the extruder during the extrusion step is typically more than 150°C, suitably between 200 to 350°C, preferably 250 to 310°C, more pref. 250 to 300°C.

Furthermore, the present invention relates to a process for the production of a polyethylene composition as described above comprising the steps of

i) polymerising ethylene monomers, and optionally one or more alpha-olefin comonomers, in the presence of a Ziegler-Natta catalyst to obtain the first ethylene homo- or copolymer fraction (A)

ii) polymerising ethylene monomers, and one or more alpha-olefin comonomers, in the presence of a Ziegler-Natta catalyst to obtain the second ethylene copolymer fraction (B) having a higher average molecular weight than fraction (A),

wherein the second polymerisation step is carried out in the presence of the polymerization product of the first step.

Still further, the present invention relates to an article, preferably a pipe comprising a polyethylene composition as described above and to the use of such a polyethylene composition for the production of an article, preferably a pipe.

**Examples**

1. Definitions and measurement methods

a) Molecular weight

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-4:2003. A Waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: $9.54* 10^{-5}$ and a: 0.725 for PS, and K: $3.92* 10^{-4}$ and a: 0.725 for PE). The ratio of $M_w$ and $M_n$ is a measure of the broadness of the distribution, since each is influenced by the opposite end of the "population".

b) Density

Density is measured according to ISO 1872, Annex A.

c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR$_2$), 5 kg (MFR$_5$) or 21.6 kg (MFR$_{21}$).

The quantity FRR (flow rate ratio) is an indication of molecular weight distribution and denotes the ratio of flow rates at different loadings. Thus, FRR$_{21/5}$ denotes the value of MFR$_{21}$/MFR$_5$.

d) Rheological parameters

Rheological parameters such as Shear Thinning Index SHI and Viscosity are determined by using a rheometer, preferably a Rheometrics Phisica MCR 300 Rheometer. The definition and measurement conditions are described in detail on page 8 line 29 to page 11, line 25 of WO 00/22040.

e) Rapid crack propagation

The rapid crack propagation (RCP) resistance of a pipe is determined according to a method called the S4 test (Small Scale Steady State), which has been developed at Imperial College, London, and which is described in ISO 13477:1997 (E).

According to the RCP-S4 test a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. While the exterior of the pipe is at ambient pressure (atmospheric pressure), the pipe is pressurised internally, and the internal pressure in the pipe is kept constant at a pressure of 0.5 MPa positive pressure. The pipe and the equipment surrounding it are thermostatted to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.5 diameters, is measured for each test and is plotted against the set test temperature. If the crack length exceeds 4 diameters, the crack is assessed to propagate. If the pipe passes the test at a given temperature, the temperature is lowered successively until a temperature is reached, at which the pipe no longer passes the test, but the crack propagation exceeds 4 times the pipe diameter. The critical temperature ($T_{crit}$), i.e. the ductile brittle transition temperature as measured according to ISO 13477:1997 (E) is the lowest temperature at which the pipe passes the test. The lower the critical temperature the better, since it results in an extension of the applicability of the pipe.

f) Slow crack propagation

The slow crack propagation resistance is determined according to ISO 13479:1997 in terms of the number of hours the pipe withstands a certain pressure at a certain temperature before failure. Herein, a pressure of 9.2 bars has been used to obtain an aimed stress of 4.6 MPa.

g) Design stress

The design stress rating is the circumferential stress a pipe is designed to withstand for 50 years without failure and is determined for different temperatures in terms of the Minimum Required Strength (MRS) according to ISO/TR 9080. Thus, MRS 8.0 means that the pipe is a pipe withstanding a hoop stress of 8.0 MPa gauge for 50 years at 20°C, and similarly MRS 10.0 means that the pipe withstands a hoop stress of 10 MPa gauge for 50 years at 20°C.

2. Polyethylene compositions

Production of polyethylene compositions base resins was performed in a multistage reaction comprising prepolymerisation in slurry in a 50 dm$^3$ loop reactor, followed by transferring the slurry to a 500 dm$^3$ loop reactor wherein polymerisation was continued in slurry to produce the low molecular weight component, and a second polymerisation in a gas phase reactor in the presence of the product from the second loop reactor to produce the comonomer containing high molecular weight component. The comonomer was 1-hexene in all compositions produced.

As a catalyst, a Ziegler-Natta catalyst in accordance with Example 1 of EP 0 688 794 has been used. The polymerisation conditions applied are listed in Table 1.

**Table 1:**

| Example | Units | 1 | (2 Comp.) | (3 Comp.) | (4 Comp.) |
| --- | --- | --- | --- | --- | --- |
| **Prepolymerisation** | | | | | |
| Prepol. Temperature | °C | 80 | 70 | 70 | 70 |

(continued)

| Example | Units | 1 | (2 Comp.) | (3 Comp.) | (4 Comp.) |
|---|---|---|---|---|---|
| **Prepolymerisation** | | | | | |
| Prepol. $C_2$ feed | kg/h | 2 | | | |
| Prepol. $H_2$ feed | g/h | 1.0 | 5.5 | 5.9 | 5.0 |
| **Slurry Polymerisation in Loop Reactor** | | | | | |
| Loop Temperature | °C | 95 | 95 | 95 | 95 |
| Loop Pressure | bar | 60 | 60 | 60 | 60 |
| Loop $H_2/C_2$ | mol/kmol | 402 | 510 | 640 | 570 |
| $MFR_2$ of Loop Product | g/10min | 296 | 550 | 1050 | 900 |
| **Gas Phase Polymerisation/Base resin properties** | | | | | |
| GPR Temperature | °C | 85 | 85 | 85 | 85 |
| $H_2/C_2$ | mol/kmol | 6 | 13 | 19 | 30 |
| $C_6/C_2$ | mol/kmol | 72 | 32 | 16 | 15 |
| Density | kg/m$^3$ | 947.5 | 950.3 | 952.6 | 954.9 |
| comonomer | | 1-hexene | 1-hexene | 1-hexene | 1-hexene |
| comonomer content | wt% | 2.8 | 1.4 | 1.0 | 0.6 |
| comonomer content | mol% | 0.93 | 0.47 | 0.33 | 0.2 |
| **Split between Reactors** | | | | | |
| Split Prepoly/Loop/GPR | weight% | 2/43/55 | 3/43/54 | 3/43/54 | 2/44/54 |
| **Properties of Composition** | | | | | |
| $MFR_5$ | g/10min | 0.33 | 0.20 | 0.17 | 0.25 |
| $MFR_{21}$ | g/10min | 9.8 | 6.5 | 5.4 | 7.9 |
| $FRR_{21/15}$ | | 30 | 32.5 | 31.8 | 31.2 |
| Density | kg/m$^3$ | 958.3 | 960.0 | 960.0 | 965.2 |
| Carbon black content | wt% | 2.3 | 2.3 | | |
| Notch test 9,2 bar | h | 4280 | 523 | | |
| Notch test 11,2 bar | h | | 198 | | |
| RCP-S4 / Tc | °C | -12 | -26 | | |
| eta$_{2.7kPa}$ | kPa | 204 | 261 | 294 | 176 |
| $SHI_{(2.7/210)}$ | | 101 | 53 | 54 | 43 |
| CTL 5.0 MPa | h | 8562 | 2278 | 180 | 28 |

**Claims**

1. A polyethylene composition comprising a base resin which comprises

    (A) an ethylene homo- or copolymer fraction, and
    (B) an ethylene copolymer fraction comprising at least one alpha-olefin comonomer having at least 4 carbon atoms,

wherein

(i) fraction (A) has a lower weight average molecular weight than fraction (B), and

(ii) the comonomer content and the density d of the base resin which is 949.5 kg/m$^3$ or lower satisfy the following relation:

$$\text{comonomer [mol\%]} \geq -0.0612 \, d \, [kg/m^3] \, mol\%/(kg/m^3) + 58.6,$$

and

(iii) the base resin comprises more than 0.5 mol% of at least one alpha-olefin comonomer having at least 4 carbon atoms.

2. A polyethylene composition according to claim 1, wherein the composition has an SHI$_{(2.7/210)}$ of 50 or more.

3. A polyethylene composition according to claim 2 wherein the comonomer content, the density d of the base resin and the shear thinning index SHI of the composition satisfy the following relation:

$$\text{comonomer [mol\%]} \geq -0.0612 \, d \, [kg/m^3] \, mol\%/(kg/m^3) + 58.5 + [(SHI/100)^3]/3,$$

if the SHI if between 50 and 100, and satisfy the following relation:

$$\text{comonomer [mol\%]} \geq -0.0612 \, d \, [kg/m^3] \, mol\%/(kg/m^3) + 58.5 + (SHI/300),$$

if the SHI is higher than 100.

4. A polyethylene composition according to any of the preceding claims wherein the composition has a slow crack propagation resistance of at least 500 h at 4.6 MPa hoop stress and 9.2 bar internal pressure at 80°C.

5. A polyethylene composition according to any of the preceding claims wherein the composition has an MFR$_5$ of 0.1 to 1.2 g/10min.

6. A polyethylene composition according to any of the preceding claims wherein the weight ratio of fractions (A):(B) in the base resin is 42:58 or higher.

7. A polyethylene composition according to any of the preceding claims wherein the base resin comprises 0.55 mol% or more of at least one alpha-olefin comonomer having at least 4 carbon atoms.

8. A polyethylene composition according to any of the preceding claims wherein fraction (B) comprises 1.0 mol% or more of at least one alpha-olefin comonomer having at least 4 carbon atoms.

9. A polyethylene composition according to any of the preceding claims wherein the alpha-olefin comonomer of fraction (B) is having from 4 to 8 carbon atoms.

10. A polyethylene composition according to any of the preceding claims wherein the base resin has an MFR$_5$ of 1 g/10min or below.

11. A polyethylene composition according to any of the preceding claims wherein fraction (A) has a density of 950 kg/m$^3$ or higher.

12. A polyethylene composition according to any of the preceding claims wherein fraction (A) is an ethylene homopolymer.

**13.** A polyethylene composition according to any of the preceding claims wherein the $MFR_2$ of the fraction (A) is at least 100 g/10min.

**14.** A polyethylene composition according to any of the preceding claims wherein the base resin has a density of 945 $kg/m^3$ or higher.

**15.** A polyethylene composition according to any of the preceding claims wherein the ratio of $MFR_2$ of fraction (A) to $MFR_5$ of the base resin is 50 or higher.

**16.** A polyethylene composition according to claim 16 wherein the ratio of $MFR_2$ of fraction (A) to $MFR_5$ of the base resin is from 100 to 10000 g/10min.

**17.** A polyethylene composition according to any of the preceding claims wherein the base resin is produced in a multistage reaction.

**18.** A process for the production of a polyethylene composition according to any of the preceding claims comprising the steps of

i) polymerising ethylene monomers, and optionally one or more alpha-olefin comonomers, in the presence of a Ziegler-Natta catalyst to obtain the first ethylene homo- or copolymer fraction (A)
ii) polymerising ethylene monomers, and one or more alpha-olefin comonomers, in the presence of a Ziegler-Natta catalyst to obtain the second ethylene copolymer fraction (B) having a higher weight average molecular weight than fraction (A),

wherein the second polymerisation step is carried out in the presence of the polymerization product of the first step.

**19.** An article comprising a polyethylene composition according to any of claims 1 to 17.

**20.** An article according to claim 19 wherein the article is a pipe.

**21.** Use of a polyethylene composition according to any of claims 1 to 17 for the production of an article.

**22.** Use according to claim 21 wherein the article is a pipe.

**Patentansprüche**

**1.** Polyethylenzusammensetzung, umfassend ein Grundharz, welches umfaßt:

(A) einen Anteil aus einen Ethylenhomo- oder -copolymer und
(B) einen Anteil aus einem Ethylencopolymer, der mindestens ein $\alpha$-Olefin-Comonomer mit mindestens 4 Kohlenstoffatomen umfaßt,

wobei:

(i) der Anteil (A) ein niedrigeres Gewichtsmittel des Molekulargewichts als der Anteil (B) hat und
(ii) der Comonomergehalt und die Dichte des Grundharzes, die 949,5 $kg/m^3$ oder weniger beträgt, in folgendem Zusammenhang stehen:

$$\text{Comonomer [Mol-\%]} \geq -0,0612 \; d \; [kg/m^3] \; \text{Mol-\%}/(kg/m^3) + 58,6$$

und
(iii) das Grundharz mehr als 0,5 Mol-% von zumindest einem $\alpha$-Olefin-Comonomer mit mindestens 4 Kohlenstoffatomen umfaßt.

**2.** Polyethylenzusammensetzung nach Anspruch 1, wobei die Zusammensetzung einen Wert für $SHI_{(2,7/210)}$ von 50 oder mehr aufweist.

**3.** Polyethylenzusammensetzung nach Anspruch 2, wobei der Comonomergehalt, die Dichte d des Grundharzes und der Strukturviskositätsindex SHI der Zusammensetzung in folgendem Zusammenhang stehen:

$$\text{Comonomer [Mol-\%]} \geq -0{,}0612\ d\ [kg/m^3]\ \text{Mol-\%}/(kg/m^3) + 58{,}5 + [(SHI/100)^3]/3,$$

wenne der SHI-Wert zwischen 50 und 100 liegt, und den folgenden Zusammenhang aufweisen:

$$\text{Comonomer [Mol-\%]} \geq -0{,}0612\ d\ [kg/m^3]\ \text{Mol-\%}/(kg/m^3) + 58{,}5 + (SHI/300),$$

wenn SHI-Wert größer als 100 ist.

**4.** Polyethylenzusammensetzung nach einem der vorstehenden Ansprüche, wobei die Zusammensetzung eine Beständigkeit gegenüber der langsamen Rißausbreitung bei einer Ringspannung von 4,6 MPa und einem Innendruck von 9,2 bar bei 80°C von mindestens 500 h aufweist.

**5.** Polyethylenzusammensetzung nach einem der vorstehenden Ansprüche, wobei die Zusammensetzung einen $MFR_5$-Wert von 0,1 bis 1,2 g/10 min aufweist.

**6.** Polyethylenzusammensetzung nach einem der vorstehenden Ansprüche, wobei das Gewichtsverhältnis der Anteile (A):(B) im Grundharz 42:58 oder mehr beträgt.

**7.** Polyethylenzusammensetzung nach einem der vorstehenden Ansprüche, wobei das Grundharz 0,55 Mol-% oder mehr von mindestens einem $\alpha$-Olefin-Comonomer mit mindestens 4 Kohlenstoffatomen umfaßt.

**8.** Polyethylenzusammensetzung nach einem der vorstehenden Ansprüche, wobei der Anteil (B) 1,0 Mol-% oder mehr von mindestens einem $\alpha$-Olefin-Comonomer mit mindestens 4 Kohlenstoffatomen umfaßt.

**9.** Polyethylenzusammensetzung nach einem der vorstehenden Ansprüche, wobei das $\alpha$-Olefin-Comonomer des Anteils (B) 4 bis 8 Kohlenstoffatome aufweist.

**10.** Polyethylenzusammensetzung nach einem der vorstehenden Ansprüche, wobei das Grundharz einen $MFR_5$-Wert von 1 g/10 min oder weniger aufweist.

**11.** Polyethylenzusammensetzung nach einem der vorstehenden Ansprüche, wobei der Anteil (A) eine Dichte von 950 $kg/m^3$ oder mehr aufweist.

**12.** Polyethylenzusammensetzung nach einem der vorstehenden Ansprüche, wobei der Anteil (A) ein Ethylenhomopolymer ist.

**13.** Polyethylenzusammensetzung nach einem der vorstehenden Ansprüche, wobei der $MFR_2$-Wert des Anteils (A) mindestens 100 g/10 min beträgt.

**14.** Polyethylenzusammensetzung nach einem der vorstehenden Ansprüche, wobei das Grundharz eine Dichte von 945 $kg/m^3$ oder mehr aufweist.

**15.** Polyethylenzusammensetzung nach einem der vorstehenden Ansprüche, wobei das Verhältnis zwischen dem $MFR_2$-Wert des Anteils (A) und dem $MFR_5$-Wert des Grundharzes 50 oder mehr beträgt.

**16.** Polyethylenzusammensetzung nach Anspruch 16, wobei das Verhältnis zwischen dem $MFR_2$-Wert des Anteils (A) und dem $MFR_5$-Wert des Grundharzes 100 bis 10.000 g/10 min beträgt.

**17.** Polyethylenzusammensetzung nach einem der vorstehenden Ansprüche, wobei das Grundharz in einer mehrstufigen Reaktion erzeugt wird.

**18.** Verfahren zur Herstellung einer Polyethylenzusammensetzung nach einem der vorstehenden Ansprüche, das die folgenden Schritte umfaßt:

i) Polymerisieren von Ethylenmonomeren und gegebenenfalls einem oder mehreren $\alpha$-Olefin-Comonomeren in Gegenwart eines Ziegler-Natta-Katalysators, wodurch ein erster Anteil (A) aus einem Ethylenhomo- oder -copolymer erhalten wird;
(ii) Polymerisieren von Ethylenmonomeren und einem oder mehreren $\alpha$-Olefin-Comonomeren in Gegenwart eines Zieg-1er-Natta-Katalysators, wodurch ein zweiter Anteil (B) aus einem Ethylencopolymer mit einem höheren Gewichtsmittel des Molekulargewichts als der Anteil (A) erhalten wird;

wobei der zweite Polymerisationsschritt in Gegenwart des Polymerisationsproduktes vom ersten Schritt durchgeführt wird.

**19.** Gegenstand, der eine Polyethylenzusammensetzung nach einem der Ansprüche 1 bis 17 umfaßt.

**20.** Gegenstand nach Anspruch 19, wobei der Gegenstand ein Rohr ist.

**21.** Verwendung einer Polyethylenzusammensetzung nach einem der Ansprüche 1 bis 17 für die Herstellung eines Gegenstandes.

**22.** Verwendung nach Anspruch 21, wobei der Gegenstand ein Rohr ist.


**Revendications**

**1.** Composition de polyéthylène comprenant une résine de base qui comprend

(A) une fraction homo- ou copolymère d'éthylène, et
(B) une fraction copolymère d'éthylène comprenant au moins un comonomère d'alpha-oléfine a au moins 4 atomes de carbone,

dans laquelle

(i) la fraction (A) possède un poids moléculaire moyen plus faible que la fraction (B), et
(ii) la teneur en comonomère et la densité d de la résine de base qui est de 949,5 $kg/m^3$ ou moins satisfont à la relation suivante :

$$\text{comonomère } [\%\ \text{mol}] \geq -0,0612\ d\ [kg/m^3]\ \%\ \text{mol}/(kg/m^3) + 58,6,$$

et
(iii) la résine de base comprend plus de 0,5 % en moles d'au moins un comonomère d'alpha-oléfine comportant au moins 4 atomes de carbone.

**2.** Composition de polyéthylène selon la revendication 1, dans laquelle la composition possède un $SHI_{(2,7/210)}$ de 50 ou plus.

**3.** Composition de polyéthylène selon la revendication 2 dans laquelle la teneur en comonomère, la densité d de la résine de base et l'indice de fluidification par cisaillement SHI de la composition satisfont à la relation suivante :

$$\text{comonomère } [\% \text{ mol}] \geq -0{,}0612 \text{ d } [kg/m^3] \% \text{ mol}/(kg/m^3) + 58{,}5 + [(SHI/100)^3]/3,$$

si le SHI est compris entre 50 et 100, et satisfait à la relation suivante :

$$\text{comonomère } [\% \text{ mol}] \geq -0{,}0612 \text{ d } [kg/m^3] \% \text{ mol}/(kg/m^3) + 58{,}5 + (SHI/300),$$

si le SHI est supérieur à 100.

4. Composition de polyéthylène selon l'une quelconque des revendications précédentes dans laquelle la composition a une résistance à la propagation lente des fissures d'au moins 500 h à une tension circonférentielle de 4,6 MPa et une pression interne de 9,2 bars à 80°C.

5. Composition de polyéthylène selon l'une quelconque des revendications précédentes dans laquelle la composition possède un $MFR_5$ de 0,1 à 1,2 g/10 min.

6. Composition de polyéthylène selon l'une quelconque des revendications précédentes dans laquelle le rapport pondéral des fractions (A):(B) dans la résine de base est de 42:58 ou plus.

7. Composition de polyéthylène selon l'une quelconque des revendications précédentes dans laquelle la résine de base comprend 0,55 % mol ou plus d'au moins un comonomère d'alpha-oléfine comportant au moins 4 atomes de carbone.

8. Composition de polyéthylène selon l'une quelconque des revendications précédentes dans laquelle la fraction (B) comprend 1,0 % mol ou plus d'au moins un comonomère d'alpha-oléfine comportant au moins 4 atomes de carbone.

9. Composition de polyéthylène selon l'une quelconque des revendications précédentes dans laquelle le comonomère d'alpha-oléfine de la fraction (B) comporte 4 à 8 atomes de carbone.

10. Composition de polyéthylène selon l'une quelconque des revendications précédentes dans laquelle la résine de base possède un $MFR_5$ de 1 g/10 min ou moins.

11. Composition de polyéthylène selon l'une quelconque des revendications précédentes dans laquelle la fraction (A) possède une densité de 950 kg/m$^3$ ou plus.

12. Composition de polyéthylène selon l'une quelconque des revendications précédentes dans laquelle la fraction (A) est un homopolymère d'éthylène.

13. Composition de polyéthylène selon l'une quelconque des revendications précédentes dans laquelle le $MFR_2$ de la fraction (A) est au moins de 100 g/10 min.

14. Composition de polyéthylène selon l'une quelconque des revendications précédentes dans laquelle la résine de base possède une densité de 945 kg/m$^3$ ou plus.

15. Composition de polyéthylène selon l'une quelconque des revendications précédentes dans laquelle le rapport entre le $MFR_2$ de la fraction (A) et le $MFR_5$ de la résine de base est de 50 ou plus.

16. Composition de polyéthylène selon la revendication 16 dans laquelle le rapport entre le $MFR_2$ de la fraction (A) et le $MFR_5$ de la résine de base est de 100 à 10 000 g/10 min.

17. Composition de polyéthylène selon l'une quelconque des revendications précédentes dans laquelle la résine de base est produite par une réaction à plusieurs étapes.

**18.** Procédé de production d'une composition de polyéthylène selon l'une quelconque des revendications précédentes comprenant les étapes consistant à

i) polymériser des monomères d'éthylène, et éventuellement un ou plusieurs comonomères d'alpha-oléfine, en présence d'un catalyseur de Ziegler-Natta pour obtenir la première fraction d'homo- ou copolymère d'éthylène (A),
ii) polymériser des monomères d'éthylène, et un ou plusieurs comonomères d'alpha-oléfine, en présence d'un catalyseur de Ziegler-Natta pour obtenir la deuxième fraction de copolymère d'éthylène (B) ayant un poids moléculaire moyen supérieur à la fraction (A),

dans lequel la deuxième étape de la polymérisation est réalisée en présence du produit de polymérisation de la première étape.

**19.** Article comprenant une composition de polyéthylène selon l'une quelconque des revendications de 1 à 17.

**20.** Article selon la revendication 19 dans lequel l'article est un tuyau.

**21.** Utilisation d'une composition de polyéthylène selon l'une quelconque des revendications 1 à 17 pour la production d'un article.

**22.** Utilisation selon la revendication 21 dans laquelle l'article est un tuyau.

**EP 1 655 333 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0739937 A
- WO 02102891 A
- EP 517868 A
- WO 2004055068 A
- WO 2004055069 A
- EP 0810235 A
- WO 0022040 A
- EP 0688794 A

**Non-patent literature cited in the description**

- **B. HAGSTRÖM.** Conference on Polymer Processing (The Polymer Processing Society. *Extended Abstracts and Final Programme,* 19 August 1997, vol. 4, 13